# EUROPÄISCHE PATENTSCHRIFT

(11) **EP 1 342 901 B1**
(45) Veröffentlichungstag und Bekanntmachung des Hinweises auf die Patenterteilung: **26.11.2008**
(21) Anmeldenummer: 03001387.4
(22) Anmeldetag: 27.01.2003
(51) Int. Cl.: F02D 41/18, F02D 41/22

(54) **Verfahren zum Erkennen einer Leckage im Einlasskanal eines Verbrennungsmotors**
Method for detecting a leak in the inlet duct of an internal combustion engine
Procédé de détection de fuites dans un collecteur d'admission d'un moteur à combustion interne

(30) Priorität: 06.03.2002 DE 10209870
(43) Veröffentlichungstag der Anmeldung: 10.09.2003
(73) Patentinhaber: Volkswagen Aktiengesellschaft, 38436 Wolfsburg (DE)
(72) Erfinder: Kirschke, Frank, 38126 Braunschweig (DE); Bergmann, Helge, 38126 Braunschweig (DE)
(74) Vertreter: Banzer, Hans-Jörg

(56) Entgegenhaltungen:
- EP-A- 1 081 361
- DE-A- 10 028 698
- DE-A- 19 750 191
- DE-A- 19 946 874

## Beschreibung

Die vorliegende Erfindung betrifft ein Verfahren zum Erkennen einer Leckage in einem Einlasskanal eines Verbrennungsmotors sowie einen Verbrennungsmotor zur Durchführung dieses Verfahrens.

Die DE 197 50 191 A1 beschreibt ein Verfahren und eine Vorrichtung zur Lasterfassung einer Brennkraftmaschine. Dabei werden zwei Luftmassenstromsignale gemessen, abgeglichen und miteinander verglichen. Es wird ein Fehler erkannt, wenn diese beiden Signale unzulässig voneinander abweichen. Bei einem Auftreten dieses Fehlers wird eine entsprechende Sicherheitsreaktion eingeleitet, die beispielsweise in einer Abschaltung der Kraftstoffzufuhr oberhalb einer vorbestimmten Motordrehzahl oder einer Momentenreduzierung bestehen kann.

Die DE 199 46 874 A1 beschreibt ein Verfahren, um die Ursache für Fehler in der Bildung des Kraftstoff/Luftgemisches für einen Verbrennungsmotor festzustellen. Dabei werden unter anderem wenigstens drei Lastsignale bestimmt, welche jeweils die Luftmenge repräsentieren, die in den Verbrennungsmotor strömt. Mithilfe dieser drei Lastsignale wird dann die Ursache des Fehlers zu ermitteln versuchte.

Die EP 1 081 361 A2 beschreibt eine Steuervorrichtung für ein Luftmassenregelsystem einer Brennkraftmaschine. Dabei wird ein Messwert der von der Brennkraftmaschine aufgenommenen Frischluftmasse erfasst. Ferner wird aus für die Betriebsbedingungen der Brennkraftmaschine repräsentativen Werten ein erwarteter Wert der Frischluftmasse bestimmt. Wenn die Differenz zwischen dem Messwert und dem erwarteten Wert eine zulässige Abweichung überschreitet, erkennt die Steuervorrichtung eine Störung. Um aus einer vorgegebenen Betriebsbedingung den erwarteten Wert zu ermitteln, werden verschiedene Betriebsbedingungen eingestellt und dann für jede dieser Betriebsbedingungen der entsprechend erhaltende erwartete Wert bestimmt. Dabei sind die Betriebsbedingungen insbesondere die Drehzahl, die Temperatur der zugeführten Frischluft und der Ladedruck.

Bei heutigen Verbrennungsmotoren ist es zur Erzielung einer optimalen Leistung und/oder eines optimalen Verbrauchs wichtig, den Verbrennungsmotor mit einem Kraftstoff-Luft-Gemisch mit einem definierten Mischungsverhältnis zu versorgen. Ein definiertes Kraftstoff-Luft-Gemisch kann insbesondere auch erforderlich sein, wenn die Abgase mittels eines Katalysators gereinigt werden sollen, da in aller Regel die Funktion eines Katalysators maßgeblich vom Mischungsverhältnis des verwendeten Kraftstoff-Luft-Gemisches abhängt. Um ein definiertes Kraftstoff-Luft-Gemisch zu erreichen, wird in einem Verbrennungsmotor ein Maß für die einströmende Luftmenge beispielsweise durch direkte Messung mit einem Luftmassenmesser ermittelt und davon abhängig eine bestimmte Kraftstoffmenge zugeführt, so dass sich das gewünschte Kraftstoff-Luft-Gemisch einstellt. Dafür ist es jedoch von wesentlicher Bedeutung, dass die einströmende Luftmasse genau bestimmt werden kann. Tritt im Einlasskanal jedoch eine Leckage auf, kann die in den Verbrennungsmotor einströmende Luftmasse nicht mehr zuverlässig bestimmt werden, so dass die Leistung und der Verbrauch des Verbrennungsmotors verschlechtert werden können.

Aufgabe der vorliegenden Erfindung ist es, ein Verfahren sowie einen Verbrennungsmotor zu schaffen, bei denen eine Leckage im Einlasskanal des Verbrennungsmotors mit geringem Aufwand erkannt werden kann.

Erfindungsgemäß wird diese Aufgabe durch ein Verfahren mit den Merkmalen des Anspruchs 1 bzw. einem Verbrennungsmotor mit den Merkmalen des Anspruchs 18 gelöst. Die Unteransprüche definieren jeweils bevorzugte und vorteilhafte Ausführungsformen der vorliegenden Erfindung.

Erfindungsgemäß wird davon ausgegangen, dass beim Betrieb des Verbrennungsmotors die zugeführte Kraftstoffmenge in Abhängigkeit der in den Verbrennungsmotor bzw. durch den Einlasskanal einströmenden Luftmenge zugeteilt wird, um das gewünschte Kraftstoff-Luft-Gemisch zu erreichen. Dabei wird als Maß für die einströmende Luftmenge entweder das Hauptlastsignal oder das Nebenlastsignal verwendet, wobei das Hauptlastsignal von dem Luftmassenmesser in Abhängigkeit des im Einlasskanal gemessenen Luftmassenstroms erzeugt wird. Das Nebenlastsignal wird aus der Stellung der Drosseleinrichtung bzw. dem Drosselgrad der Drosseleinrichtung und der Drehzahl des Verbrennungsmotors ermittelt und stellt im Gegensatz zum Hauptlastsignal, das eine direkte Messung des Luftmassenstroms darstellt, ein indirektes Maß für den in den Verbrennungsmotor einströmenden Luftmassenstrom dar. Das Nebenlastsignal wird insbesondere in dynamischen Betriebszuständen, beispielsweise bei starken Drehzahländerungen, verwendet, in denen das Nebenlastsignal den tatsächlich durch den Einlasskanal strömenden Luftmassenstrom besser wiedergibt. Idealerweise sind in Betriebsphasen, in denen das Hauptlastsignal den tatsächlich in den Verbrennungsmotor einströmenden Luftmassenstrom richtig wiedergibt, Hauptlastsignal und Nebenlastsignal gleich.

Da in der Praxis ausschließlich durch den Drosselgrad der Drosseleinrichtung und der Drehzahl des Verbrennungsmotors der in den Verbrennungsmotor einströmende Luftmassenstrom schlecht exakt bestimmt werden kann, wird bei Verwendung des Nebenlastsignals zur Bestimmung der zugeführten Kraftstoffmenge zusätzlich die Luftmassenkorrekturgröße berücksichtigt, mit der das Nebenlastsignal korrigiert wird. Die Luftmassenkorrekturgröße wiederum kann durch Vergleich des Hauptlastsignals mit dem Nebenlastsignal ermittelt werden. Vorzugsweise wird die Luftmassenkorrekturgröße in Betriebsphasen des Verbrennungsmotors ermittelt, in denen das Hauptlastsignal bzw. das Ausgangssignal des Luftmassenmessers zuverlässig ein richtiges Maß für den in den Verbrennungsmotor einströmenden Luftmassenstrom wiedergibt. In diesen Betriebsphasen wird davon ausgegangen, dass das Hauptlastsignal den in den Verbrennungsmotor einfließenden Luftmassenstrom korrekt wiedergibt und die Luftmassenkorrekturgröße so bemessen, dass sie die Abweichung des Nebenlastsignals vom Hauptlastsignal bei der Ermittlung der zugeführten Kraftstoffmenge ausgleicht.

Tritt nun im Einlasskanal des Verbrennungsmotors eine Leckage in Strömungsrichtung hinter der Drosseleinrichtung und dem Luftmassenmesser auf, strömt über die Drosseleinrichtung und den Luftmassenmesser die gleiche Luftmasse, so dass keine Abweichung zwischen Hauptlastsignal und Nebenlastsignal auftritt und somit die Luftmassenkorrekturgröße nicht verändert wird.

Tritt dagegen die Leckage zwischen Drosseleinrichtung und Luftmassenmesser auf, wobei der Luftmassenmesser in Strömungsrichtung vor der Drosseleinrichtung angeordnet ist, strömen über den Luftmassenmesser und die Drosseleinrichtung unterschiedliche Luftmassen. Die Luftmasse über der Drosseleinrichtung ist gleich der Luftmasse über dem Luftmassenmesser zuzüglich der Falschluft durch die Leckage. Somit ist das Hauptlastsignal kleiner als das Nebenlastsignal. Diese Abweichung wird vom System ausgeglichen, indem die Luftmassenkorrekturgröße neu berechnet wird. Die Folge davon ist, dass die berechnete Luftmassenkorrekturgröße kleiner wird, obwohl dies eigentlich falsch ist. Somit kann aus einer bestimmten und insbesondere unüblichen Änderung der Luftmassenkorrekturgröße zuverlässig auf eine Leckage zwischen Luftmassenmesser und Drosseleinrichtung geschlossen werden.

Die Überwachung der Luftmassenkorrekturgröße kann auf verschiedene Weisen erfolgen. Beispielsweise kann überwacht werden, ob die Luftmassenkorrekturgröße einen bestimmten vorgegebenen Grenzwert über- bzw. unterschreitet. So kann für die Luftmassenkorrekturgröße ein Bereich vorgegeben werden, innerhalb dessen sich die Luftmassenkorrekturgröße bewegen kann, wenn der Einlasskanal keine Leckage aufweist. Verlässt die Luftmassenkorrekturgröße diesen Bereich, wird das Lecksignal zum Anzeigen einer Leckage erzeugt. Vorteilhafterweise werden jedoch zeitliche Änderungen der Luftmassenkorrekturgröße überwacht, um nicht in Folge von langfristigen Driftvorgängen verschiedener Motorparameter eine fehlerhafte Leckerkennung zu erhalten.

Des Weiteren können Größen überwacht werden, die den zeitlichen Verlauf der Luftmassenkorrekturgröße bezeichnen. Dies können beispielsweise Anstiegsgeschwindigkeiten, zeitliche Ableitungen oder Extremwerte des zeitlichen Verlaufs der Luftmassenkorrekturgröße sein.

Vorteilhafterweise wird in regelmäßigen Abständen die Luftmassenkorrekturgröße abgespeichert und eine aktuell ermittelte Luftmassenkorrekturgröße mit einem zuvor abgespeicherten Vergleichswert der Luftmassenkorrekturgröße verglichen. Eine dabei gegebenenfalls aufgetretene Veränderung kann mit einem vorgegebenen Grenzwert verglichen werden und bei einem Überschreiten das Lecksignal erzeugt werden. Beispielsweise kann das Verfahren zum Erkennen einer Leckage kurz nach dem Start des Verbrennungsmotors durchgeführt werden und dabei als Vergleichswert für die Luftmassenkorrekturgröße ein während und insbesondere am Ende des vorangegangenen Betriebs des Verbrennungsmotors ermittelter Wert der Luftmassenkorrekturgröße herangezogen werden. Vorteilhafterweise wird nach dem Start des Verbrennungsmotors die Leckerkennung erst durchgeführt, wenn die Ermittlung der Luftmassenkorrekturgröße eingeschwungen ist.

Die Leckerkennung kann insbesondere in Betriebsphasen durchgeführt werden, in denen die Drehzahl des Verbrennungsmotors durch Beeinflussung der Drosseleinrichtung konstant gehalten wird. Dies ist insbesondere im Leerlauf der Fall.

Bei der vorliegenden Erfindung wird bei dem Verbrennungsmotor, der zusätzlich eine Lambdaregelung besitzt, das Stellsignal der Lambdaregelung zur Leckdiagnose mit herangezogen. Bei der Lambdaregelung wird der Sauerstoffgehalt des Abgases des Verbrennungsmotors gemessen und davon abhängig ein Stellsignal erzeugt, das die zugeteilte Kraftstoffmenge beeinflusst. Dabei wird von der Lambdaregelung als Regelziel angestrebt, dass der Sauerstoffgehalt im Abgas einem vorgegebenen Sollwert entspricht. Wenn bei einem solchen Verbrennungsmotor hinter dem Luftmassenmesser eine Leckage im Einlasskanal auftritt, strömt in den Verbrennungsmotor mehr Luft als vom Luftmassenmesser gemessen werden kann. Dies führt bei unveränderter zugeteilter Kraftstoffmenge zu einem erhöhten Sauerstoffgehalt im Abgas, der von der Lambdaregelung erfasst und durch eine Erhöhung des Stellsignals zur Erhöhung der zugeteilten Kraftstoffmenge ausgeregelt wird. Wenn das Stellsignal der Lambdaregelung dahingehend überwacht wird, ob es einen ungewöhnlich hohen Wert einnimmt bzw. wenn die Lambdaregelung ungewöhnlich stark eingreifen muss, kann auf diese Weise eine Leckage im Einlasskanal hinter dem Luftmassenmesser erkannt werden. Wenn zusätzlich die Information aus der Überwachung der Luftmassenkorrekturgröße vorliegt, kann auf diese Weise der Ort der Leckage im Einlasskanal genauer ermittelt werden. Durch Auswertung des Stellsignals der Lambdaregelung kann allgemein eine Leckage zwischen Verbrennungsmotor und Luftmassenmesser im Einlasskanal erkannt werden. Die genaue Lage der Leckage und insbesondere, ob die Leckage vor oder hinter der Drosseleinrichtung aufgetreten ist, hat keinen Einfluss auf das Stellsignal der Lambdaregelung.

Bei der Leckageerkennung durch Überwachung der Luftmassenkorrekturgröße ist es jedoch von erheblicher Bedeutung, ob die Leckage vor oder hinter der Drosseleinrichtung aufgetreten ist. Wenn die Leckage in Strömungsrichtung hinter der Drosseleinrichtung aufgetreten ist, ändert sich die Luftmassenkorrekturgröße nur sehr geringfügig oder überhaupt nicht, so dass eine Leckage in diesem Abschnitt des Einlasskanals nur zu einem Ansprechen der Lecküberwachung durch Auswertung des Stellsignals der Lambdaregelung führt. Wenn demzufolge durch Überwachung des Stellsignals der Lambdaregelung eine Leckage im Einlasskanal erkannt wird, kann durch Auswertung der Luftmassenkorrekturgröße unterschieden werden, ob die Leckage vor oder hinter der Drosseleinrichtung aufgetreten ist.

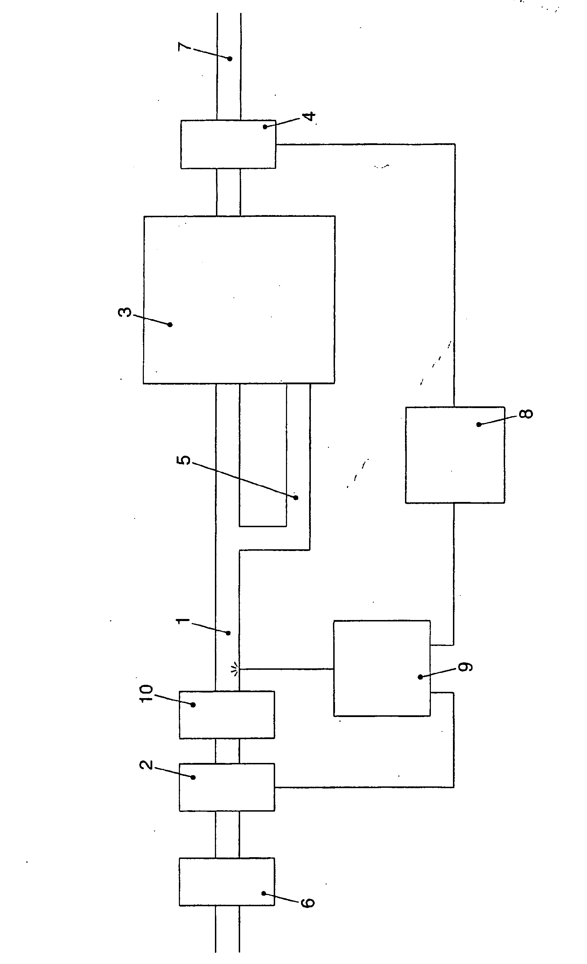

Die Erfindung wird nachfolgend anhand eines bevorzugten Ausführungsbeispiels unter Bezugnahme auf die beigefügte Zeichnung näher erläutert.

Die Figur zeigt den schematischen Aufbau eines Verbrennungsmotors zusammen mit den zur Durchführung des erfindungsgemäßen Verfahrens notwendigen Komponenten gemäß dem Ausführungsbeispiel der vorliegenden Erfindung.

In dem Funktionsschema sind ein Verbrennungsmotor 3 mit einem Einlasskanal 1 und einem Auslasskanal 7 dargestellt. Durch den Einlasskanal 1 wird die zur Verbrennung notwendige Luft angesaugt, wohingegen durch den Auslasskanal 7 die Verbrennungsgase ausgestoßen werden. Im Einlasskanal 1 ist zuvorderst ein Luftfilter 6 zur Reinigung der einströmenden Luft angeordnet. In Strömungsrichtung hinter dem Luftfilter 6 ist ein Luftmassenmesser 2 angeordnet, hinter dem eine Drosseleinrichtung 10 angeordnet ist. Der Luftmassenmesser 2 ermittelt die in den Einlasskanal 1 je Zeiteinheit einströmende Luftmasse. Die Drosseleinrichtung 10 dient dazu, die in den Verbrennungsmotor 3 einströmende Luftmenge zu beeinflussen.

Der Verbrennungsmotor 3 ist ein Kolbenmotor mit einem Kurbelgehäuse, dem eine Kurbelgehäuse-Entlüftung 5 zugeordnet ist. Die Kurbelgehäuse-Entlüftung 5 dient dazu, Kraftstoffdämpfe, die am Kolben vorbei in das Kurbelgehäuse gelangt sind, wieder abzusaugen. Dazu ist die Kurbelgehäuse-Entlüftung 5 mit dem Einlasskanal 1 verbunden.

Im Auslasskanal 7 ist eine Lambdasonde 4 angeordnet, um den Sauerstoffgehalt der Verbrennungsgase zu messen.

Zur Steuerung des Verbrennungsmotors 3 ist eine Steuereinrichtung 9 und eine Lambdaregelung 8 vorgesehen, um die zum Betrieb des Verbrennungsmotors 3 erforderliche Kraftstoffmenge 3 zu bestimmen. Dazu ist die Steuereinrichtung 9 mit dem Luftmassenmesser 2 verbunden, der das Ergebnis der Luftmassenmessung als Hauptlastsignal an die Steuereinrichtung 9 leitet. Die Steuereinrichtung 9 erhält weiterhin ein Stellsignal von der Lambdaregelung 8, die wiederum mit der Lambdasonde 4 verbunden ist.

Die Steuereinrichtung 9 ist so eingerichtet, dass sie abhängig von der im Luftmassenmesser 2 ermittelten Luftmasse die erforderliche Kraftstoffmenge berechnet, die zum Erreichen eines gewünschten Kraftstoff-Luft-Verhältnisses erforderlich ist. Dieses vorgegebene Kraftstoff-Luft-Gemisch führt nach der Verbrennung im Verbrennungsmotor 3 zu einem bestimmten Sauerstoffgehalt der Abgase im Auslasskanal 7, der wiederum von der Lambdasonde 4 erfasst und mittels der Lambdaregelung 8 auf einen Sollwert hin geregelt werden kann.

Dazu ist die Lambdaregelung 8 so ausgelegt, dass sie mit Hilfe des an die Steuereinrichtung 9 geleiteten Stellsignals die zugeführte Kraftstoffmenge bzw. das in den Verbrennungsmotor 3 einströmende Kraftstoff-Luft-Gemisch so beeinflusst, dass der Sauerstoffgehalt der Verbrennungsgase einen bestimmten Sollwert einnimmt. Die Lambdaregelung 8 bildet somit über den Eingriff in die Steuereinrichtung 9 einen geschlossenen Regelkreis zur Regelung des Sauerstoffgehalt des Abgases im Auslasskanal 7.

Die Steuereinrichtung 9 ermittelt die zugeteilte Kraftstoffmenge im Wesentlichen durch Auswertung der in den Verbrennungsmotor 3 einströmenden Luftmasse. Dazu verwendet die Steuereinrichtung 9 zwei verschiedene Signale, das Hauptlastsignal und das Nebenlastsignal, wobei das Hauptlastsignal dem Messergebnis des Luftmassenmessers 2 entspricht und zumindest in stationären Betriebszuständen des Verbrennungsmotors 3 die einströmende Luftmasse korrekt wiedergibt. Parallel dazu wird in der Steuereinrichtung 9 ein Nebenlastsignal vorgehalten, auf das in manchen und insbesondere hochdynamischen Betriebszuständen zugegriffen werden kann, wenn in diesen Betriebszuständen eine Erfassung der einströmenden Luftmasse über den Luftmassenmesser bzw. durch Auswertung des Hauptlastsignals ungenauer wäre. Dieses Nebenlastsignal wird in Abhängigkeit der Stellung der Drosseleinrichtung 10 bzw. dessen Drosselgrad und der Drehzahl des Verbrennungsmotors 3 gewonnen. Um bei Zugriff auf das Nebenlastsignal die zugeführte Kraftstoffmenge besser ermitteln zu können, wird bei Auswertung des Nebenlastsignals zusätzlich eine Luftmassenkorrekturgröße berücksichtigt, mit der das Nebenlastsignal korrigiert wird. Diese Luftmassenkorrekturgröße wird von der Steuereinrichtung 9 in Betriebsphasen des Verbrennungsmotors 3 ermittelt, in denen davon ausgegangen werden kann, dass der Luftmassenmesser 2 bzw. das Hauptlastsignal die in den Verbrennungsmotor 3 strömende Luftmasse korrekt wiedergibt.

Diese Luftmassenkorrekturgröße wird in regelmäßigen Abständen, insbesondere sobald ein dafür geeigneter Betriebszustand eintritt, ermittelt. Daneben wird ein während eines vorangegangenen Betriebs des Verbrennungsmotors 3 ermittelter Wert für die Luftmassenkorrekturgröße als Vergleichswert für die Luftmassenkorrekturgröße abgespeichert. Dieser Vergleichswert wird nur abgespeichert, wenn durch geeignete Prüfungen sichergestellt ist, dass der Vergleichswert in einem fehlerfreien Zustand des Verbrennungsmotors 3 ermittelt worden ist. Nach dem Start des Verbrennungsmotors wird sobald möglich ein aktueller Wert der Luftmassenkorrekturgröße ermittelt und mit einem abgespeicherten Vergleichswert verglichen. Wenn der Betrag der Differenz zwischen dem ermittelten Wert der Luftmassenkorrekturgröße und dem Vergleichswert über einem bestimmten Grenzwert liegt, wird dies als Hinweis auf eine Leckage im Einlasskanal 1 gewertet.

Wenn nun im Einlasskanal 1 eine Leckage hinter dem Luftmassenmesser 2 auftritt, so führt dies zu einer falschen Messung des Luftmassenmessers 2. Die Steuereinrichtung 9 teilt in diesem Fall zu wenig Kraftstoff zu, so dass der Kraftstoffgehalt im Kraftstoff-Luft-Gemisch zu niedrig ist. Dies führt zu einem zu hohen Sauerstoffgehalt im Abgas im Auslasskanal 7 bzw. zu einer Abweichung des Sauerstoffgehalts vom Sollwert. Diese Abweichung des Sauerstoffgehalts im Auslasskanal 7 wird von der Lambdasonde 4 und der Lambdaregelung 8 erfasst und durch einen Eingriff in die Steuereinrichtung 9 ausgeglichen. Der in diesem Fall stark erhöhte Steuereingriff der Lambdaregelung 8 wird von der Steuereinrichtung 9 als Signal für das Auftreten einer Leckage im Einlasskanal 1 verwendet. Dazu erzeugt die Steuereinrichtung 9 ein Auswertesignal in Abhängigkeit des Stellsignals der Lambdaregelung 8 und wertet dieses aus. Das Auswertesignal wird von der Steuereinrichtung durch Multiplikation des Stellsignals der Lambdaregelung 8 mit Korrekturfaktoren erzeugt. Die Korrekturfaktoren werden abhängig von der Höhe, auf der der Verbrennungsmotor 3 betrieben wird, der Temperatur des Verbrennungsmotors 3 und von Adaptionswerten erzeugt.

Die Adaptionswerte werden von der Steuereinrichtung 9 in Lernphasen erzeugt und bei der Bestimmung des Stellsignals berücksichtigt, um sich langsam ändernde mittelfristige oder langfristige Einflüsse auf die erforderliche Kraftstoffmenge zu berücksichtigen. Diese Einflüsse können beispielsweise die Kraftstoffqualität, Bauteiltoleranzen oder sich ändernde Verbrennungsbedingungen sein. Mit Hilfe der Adaptionswerte ist es möglich, das Stellsignal der Lambda-Regelung 8 in einem optimalen Bereich und insbesondere in der Nähe der Neutrallage zu halten. Von der Steuereinrichtung 9 werden sowohl additive, bei der Stellsignalbestimmung additiv berücksichtigte als auch multiplikative, bei der Stellsignalbestimmung multiplikativ berücksichtigte Adaptionswerte erzeugt, wobei die additiven Adaptionswerte im Leerlaufbetrieb und die multiplikativen Adaptionswerte im Teillastbereich verwendet werden.

Zur Auswertung des Auswertesignals ist in der Steuereinrichtung 9 in einer Leerlaufphase des Verbrennungsmotors 3 ein Messfenster mit einer Dauer von 8 Sekunden vorgesehen. Während der Dauer dieses Messfensters überwacht die Steuereinrichtung 9, ob das Auswertesignal der Lambda-Regelung 8 einen oberen Grenzwert überschreitet oder einen unteren Grenzwert unterschreitet. Die Steuereinrichtung 9 misst dabei eine erste Zeitdauer, in der das Auswertesignal den oberen Grenzwert überschreitet, und eine zweite Zeitdauer, in der der untere Grenzwert unterschritten wird. Die Zeitdauer, in der das Auswertesignal zwischen diesen beiden Grenzwerten liegt, wird außer Acht gelassen. Auf diese Weise kann erreicht werden, dass in unsicheren Fällen keine fehlerhafte Erkennung einer Leckage im Einlasskanal 1 erfolgt.

Während der Dauer des Messfensters wird ständig die zweite Zeitdauer von der ersten Zeitdauer subtrahiert und die erhaltene Differenz auf die verstrichene Zeitdauer des Messfensters bezogen. Das Ergebnis ist ein Verhältnis, das sich je nach den beiden Zeitdauern zwischen -1 und +1 bewegt. Dieses Verhältnis wird ab einer Mindestmesszeit von insbesondere 4 Sekunden mit einer Fehlerschwelle, deren Wert 0,8 beträgt, verglichen und ein Fehlersignal erzeugt, wenn das Verhältnis über der Fehlerschwelle liegt.

Auf eine Leckage in Einlasskanal 1 wird demnach dann erkannt, wenn das Auswertesignal der Lambda-Regelung 8 lange Zeit über dem oberen Grenzwert lag, d. h., die Lambda-Regelung 8 über einen langen Zeitraum versucht, zusätzlichen Kraftstoff zuzumessen.

Zur Erkennung einer Leckage im Einlasskanal 1 ist die Steuereinrichtung 9 weiterhin so eingerichtet, dass sie die Luftmassenkorrekturgröße auf ungewöhnliche Werte oder Veränderungen überwacht. Wenn in dem Einlasskanal 1 eine Leckage zwischen dem Luftmassenmesser 2 und der Drosseleinrichtung 10 auftritt, führt dies dazu, dass der Verbrennungsmotor 3 die Luft zum Teil über den Luftmassenmesser 2 und zum Teil über die Leckage ansaugt. Demzufolge verringert sich das Ausgangssignal des Luftmassenmessers 2 und damit das Hauptlastsignal. Das Nebenlastsignal hingegen bleibt konstant, da durch die Leckage in Strömungsrichtung vor der Drosseleinrichtung 10 sich die in den Verbrennungsmotor 3 einströmende Luftmasse nicht erhöht und somit auch keine Auswirkung auf Drehzahl des Verbrennungsmotors 3 oder den Drosselgrad der Drosseleinrichtung 10 hat. Die Leckage zwischen dem Luftmassenmesser 2 und der Drosseleinrichtung 10 führt daher zu einer Differenz zwischen Hauptlastsignal und Nebenlastsignal und damit zu einer Veränderung der Luftmassenkorrekturgröße. Die Steuereinrichtung 9 überwacht, ob die Luftmassenkorrekturgröße einen bestimmten Wert unterschreitet und erzeugt in einem solchen Fall ein Lecksignal, das eine Leckage im Einlasskanal 1 anzeigt. Weiterhin ist es möglich, mittels der Steuereinrichtung 9 wie zuvor beschrieben die Differenz zwischen aktueller Luftmassenkorrekturgröße und einem gepeicherten Vergleichswert auszuwerten.

Anders verhält es sich jedoch, wenn die Leckage im Einlasskanal zwischen Drosseleinrichtung 10 und Verbrennungsmotor 3 auftritt, beispielsweise auf Grund einer mangelhaften Verbindung zwischen der Kurbelgehäuseentlüftung 5 und dem Einlasskanal 1. In diesem Fall verringert sich die durch den Luftmassenmesser 2 strömende Luftmasse, so dass das Hauptlastsignal abnimmt. Da die Leckage in diesem Fall in einem mit Unterdruck beaufschlagten Abschnitt des Einlasskanals 1 auftritt, erhöht sich durch die Leckage die in den Verbrennungsmotor 3 strömende Luftmasse. Dies beeinflusst auf verschiedene Weisen das Nebenlastsignal, das auf diese Weise ebenfalls abnimmt, insbesondere durch das Eingreifen einer Leerlaufdrehzahlregelung.

Da bei einer Leckage im Einlasskanal zwischen Drosseleinrichtung 10 und Verbrennungsmotor 3 sowohl das Hauptlastsignal als auch das Nebenlastsignal abnimmt, führt dies zu keiner oder einer nur geringfügigen Veränderung der Luftmassenkorrekturgröße. Die Steuereinrichtung 9 kann aus diesem Grund unterscheiden, ob die Leckage im Einlasskanal 1 vor oder hinter der Drosseleinrichtung 10 aufgetreten ist.

Wenn das in Abhängigkeit des Stellsignals der Lambdaregelung 8 erzeugte Auswertesignal auf eine Leckage im Einlasskanal 1 hinweist und die Änderung der Luftmassenkorrekturgröße einen bestimmten Grenzwert überschreitet, deutet dies auf eine Leckage zwischen dem Luftmassenmesser 2 und der Drosseleinrichtung 10 hin. Wenn dagegen das Auswertesignal eine Leckage anzeigt und die Luftmassenkorrekturgröße nur geringfügig oder nicht verändert wurde, deutet dies auf eine Leckage zwischen der Drosseleinrichtung 10 und dem Verbrennungsmotor 3 hin.

### BEZUGSZEICHENLISTE

- 1: Einlasskanal
- 2: Luftmassenmesser
- 3: Verbrennungsmotor
- 4: Lambdasonde
- 5: Kurbelgehäuseentlüftung
- 6: Luftfilter
- 7: Auslasskanal
- 8: Lambdaregelung
- 9: Steuereinrichtung
- 10: Drosseleinrichtung

## Patentansprüche

1. Verfahren zum Erkennen einer Leckage in einem Einlasskanal (1) eines Verbrennungsmotors (3), wobei im Einlasskanal (1) eine Drosseleinrichtung (10) und ein Luftmassenmesser (2) angeordnet sind, wobei der Luftmassenmesser (2) in Strömungsrichtung vor der Drosseleinrichtung (10) angeordnet ist, und
eine zugeführte Kraftstoffmenge in Abhängigkeit entweder
eines vom Luftmassenmesser (2) in Abhängigkeit des gemessenen Luftmassenstroms erzeugten Hauptlastsignals oder
eines Nebenlastsignals, das abhängig von dem Drosselgrad der Drosseleinrichtung (10) und der Drehzahl des Verbrennungsmotors (3) erzeugt wird, und einer Luftmassenkorrekturgröße ermittelt wird, die durch Vergleich des Hauptlastsignals mit dem Nebenlastsignal ermittelt wird,
wobei die zugeführte Kraftstoffmenge von einem Stellsignal einer Lambdaregelung (8) bestimmt wird, die den Sauerstoffgehalt des Abgases des Verbrennungsmotors (3) nach der Verbrennung misst und das Stellsignal derart beeinflusst, dass der Sauerstoffgehalt des Abgases einen bestimmten Wert annimmt,
**dadurch gekennzeichnet, dass** ein Auswertesignal in Bezug auf das Überschreiten bzw. Unterschreiten eines Grenzwerts überwacht wird, wobei das Auswertesignal in Abhängigkeit des Stellsignals der Lambdaregelung (8) erzeugt wird und ein Lecksignal, das eine Leckage im Einlasskanal (1) anzeigt, in Abhängigkeit der Luftmassenkorrekturgröße und des Auswertesignals erzeugt wird, und
dass durch eine Auswertung der Luftmassenkorrekturgröße unterschieden wird, ob die Leckage vor oder hinter der Drosseleinrichtung (10) aufgetreten ist.

2. Verfahren nach Anspruch 1, **dadurch gekennzeichnet, dass** das Lecksignal in Abhängigkeit davon erzeugt wird, ob die Luftmassenkorrekturgröße und/oder eine den zeitlichen Verlauf der Luftmassenkorrekturgröße kennzeichnende Größe einen vorgegebenen Grenzwert über- oder unterschreitet.

3. Verfahren nach Anspruch 2, **dadurch gekennzeichnet, dass** das Lecksignal in Abhängigkeit davon erzeugt wird, ob eine zeitliche Änderung der Luftmassenkorrekturgröße einen vorgegebenen Grenzwert über- oder unterschreitet.

4. Verfahren nach einem der vorhergehenden Ansprüche, **dadurch gekennzeichnet, dass** die Erkennung einer Leckage im Einlasskanal (1) während einer Betriebsphase des Verbrennungsmotors (3) durchgeführt wird, in der die Drehzahl des Verbrennungsmotors (3) von einer Regelung konstant gehalten wird, die als Stellglied die Drosseleinrichtung (10) verwendet.

5. Verfahren nach einem der vorhergehenden Ansprüche, **dadurch gekennzeichnet, dass** die Erkennung einer Leckage im Einlasskanal (1) während des Leerlaufs des Verbrennungsmotors (3) durchgeführt wird.

6. Verfahren nach einem der vorhergehenden Ansprüche, **dadurch gekennzeichnet, dass** die Differenz zwischen der während eines Betriebs des Verbrennungsmotors (3) ermittelten Luftmassenkorrekturgröße und einem während eines vorangegangenen Betriebs des Verbrennungsmotors ermittelten und abgespeicherten Vergleichswert der Luftmassenkorrekturgröße gebildet wird und das Lecksignal in Abhängigkeit davon erzeugt wird, ob die Differenz einen vorgegebenen Grenzwert über- oder unterschreitet.

7. Verfahren nach einem der vorhergehenden Ansprüche, **dadurch gekennzeichnet, dass** die Erkennung einer Leckage im Einlasskanal (1) eine bestimmte Zeitdauer nach dem Start des Verbrennungsmotors (3) durchgeführt wird.

8. Verfahren nach einem der vorhergehenden Ansprüche, **dadurch gekennzeichnet, dass** die Luftmassenkorrekturgröße derart ermittelt wird, dass sie der Differenz zwischen dem zu einem bestimmten Zeitpunkt ermittelten Hauptlastsignal und dem zu diesem Zeitpunkt ermittelten Nebenlastsignal entspricht.

9. Verfahren nach einem der vorhergehenden Ansprüche, **dadurch gekennzeichnet, dass** die Abhängigkeit der zugeführten Kraftstoffmenge von der einströmenden Luftmasse ein bestimmtes stöchiometrisches Verhältnis zwischen der Luftmasse und der Kraftstoffmenge ist.

10. Verfahren nach einem der vorhergehenden Ansprüche, **dadurch gekennzeichnet, dass** das Auswertesignal durch Multiplikation des Stellsignals des Lambda-Reglers (8) mit wenigstens einem Korrekturwert erzeugt wird, der in Abhängigkeit wenigstens eines Adaptionswerts erzeugt wird, der von der Lambda-Regelung (8) in bestimmten Betriebsphasen des Verbrennungsmotors (3) erzeugt und zur Beeinflussung des Stellsignals der Lambda-Regelung (8) verwendet wird.

11. Verfahren nach Anspruch 10, **dadurch gekennzeichnet, dass** der wenigstens eine Korrekturwert in Abhängigkeit der Änderung des wenigstens einen Adaptionswerts erzeugt wird.

12. Verfahren nach Anspruch 10 oder 11, **dadurch gekennzeichnet, dass** ein multiplikativer Adaptionswert erzeugt wird, der bei der Bestimmung des Stellsignals multiplikativ wirkt.

13. Verfahren nach Anspruch 10 oder 11, **dadurch gekennzeichnet, dass** ein additiver Adaptionswert erzeugt wird, der bei der Bestimmung des Stellsignals additiv wirkt.

14. Verfahren nach einem der vorhergehenden Ansprüche, **dadurch gekennzeichnet, dass** das Auswertesignal durch Multiplikation des Stellsignals des Lambda-Reglers (8) mit einem Höhenkorrekturwert erzeugt wird, der in Abhängigkeit der Höhe erzeugt wird, auf der sich der Verbrennungsmotor (3) befindet.

15. Verfahren nach einem der vorhergehenden Ansprüche, **dadurch gekennzeichnet, dass** das Auswertesignal durch Multiplikation des Stellsignals des Lambda-Reglers (8) mit einem Temperaturkorrekturwert erzeugt wird, der in Abhängigkeit der Temperatur des Verbrennungsmotors (3) erzeugt wird.

16. Verfahren nach einem der vorhergehenden Ansprüche, **dadurch gekennzeichnet, dass** während der Zeitdauer eines Messfensters eine erste Zeitdauer gemessen wird, in der das Auswertesignal den Grenzwert überschreitet, und eine zweite Zeitdauer ermittelt wird, in der das Stellsignal den Grenzwert unterschreitet, die Differenz zwischen der ersten und der zweiten Zeitdauer auf die verstrichene Zeitdauer des Messfensters zur Gewinnung einer Bezugsgröße bezogen wird und zum Erkennen einer Leckage in dem Einlasskanal (1) die Bezugsgröße mit einer Fehlerschwelle verglichen wird.

17. Verfahren nach Anspruch 16, **dadurch gekennzeichnet, dass** die Gesamtzeitdauer des Messfensters 8 Sekunden dauert und eine Erkennung einer Leckage erst nach einer Mindestzeitdauer von 4 Sekunden zugelassen wird.

18. Verbrennungsmotor (3) mit einem Einlasskanal (1), in dem eine Drosseleinrichtung (10) und ein Luftmassenmesser (2) angeordnet sind, und einer Steuereinrichtung (9),
wobei der Luftmassenmesser (2) in Strömungsrichtung vor der Drosseleinrichtung (10) angeordnet ist und wobei die Steuereinrichtung derart eingerichtet ist, dass sie eine zugeführte Kraftstoffmenge in Abhängigkeit entweder
eines vom Luftmassenmesser (2) in Abhängigkeit des gemessenen Luftmassenstroms erzeugten Hauptlastsignals, oder
eines Nebenlastsignals, das von der Steuereinrichtung (9) abhängig von dem Drosselgrad der Drosseleinrichtung (10) und der Drehzahl des Verbrennungsmotors (3) erzeugt wird, und einer Luftmassenkorrekturgröße ermittelt, die die Steuereinrichtung (9) durch Vergleich des Hauptlastsignals mit dem Nebenlastsignal ermittelt,
wobei die Steuereinrichtung (9) derart eingerichtet ist, dass die zugeführte Kraftstoffmenge von einem Stellsignal einer Lambdaregelung (8) des Verbrennungsmotors (3) bestimmt wird, die den Sauerstoffgehalt des Abgases des Verbrennungsmotors (3) nach der Verbrennung misst und das Stellsignal derart beeinflusst, dass der Sauerstoffgehalt des Abgases einen bestimmten Wert annimmt,
**dadurch gekennzeichnet, dass** die Steuereinrichtung (9) derart eingerichtet ist, dass die Steuereinrichtung (9) ein Auswertesignal in Abhängigkeit des Stellsignals der Lambdaregelung (8) erzeugt und in Bezug auf das Überschreiten bzw. Unterschreiten eines Grenzwerts überwacht, wobei die Steuereinrichtung (9) ein Lecksignal, das eine Leckage im Einlasskanal (1) anzeigt, in Abhängigkeit der Luftmassenkorrekturgröße und des Auswertesignals erzeugt, und dass die Steuereinrichtung (9) durch eine Auswertung der Luftmassenkorrekturgröße unterscheidet, ob die Leckage vor oder hinter der Drosseleinrichtung (10) aufgetreten ist.

19. Verbrennungsmotor nach Anspruch 18, **dadurch gekennzeichnet, dass** die Steuereinrichtung (9) zur Durchführung des Verfahrens nach einem der Ansprüche 1 bis 17 eingerichtet ist.

## Claims

1. Method for detecting a leak in an inlet duct (1) of an internal combustion engine (3), with a throttle device (10) and an air mass sensor (2) being arranged in the inlet duct (1), with the air mass sensor (2) being arranged upstream of the throttle device (10) in the flow direction, and a supplied fuel quantity being determined as a function either
of a main load signal generated by the air mass sensor (2) as a function of the measured air mass flow, or
of an auxiliary load signal which is generated as a function of the degree of throttling of the throttle device (10) and of the rotational speed of the internal combustion engine (3), and
of an air mass corrective value which is determined by comparing the main load signal with the auxiliary load signal,
with the supplied fuel quantity being determined from an actuating signal of a lambda controller (8) which measures the oxygen content of the exhaust gas of the internal combustion engine (3) after the combustion and which influences the actuating signal such that the oxygen content of the exhaust gas assumes a certain value,
**characterized in that** an evaluation signal is monitored with regard to the exceedance or undershooting of a limit value, with the evaluation signal being generated as a function of the actuating signal of the lambda controller (8), and a leak signal which indicates a leak in the inlet duct (1) being generated as a function of the air mass corrective value and of the evaluation signal, and
**in that**, by evaluating the air mass corrective value, it is distinguished whether the leak has occurred upstream or downstream of the throttle device (10).

2. Method according to Claim 1, **characterized in that** the leak signal is generated as a function of whether the air mass corrective value and/or a value which characterizes the time profile of the air mass corrective value exceeds or undershoots a predefined limit value.

3. Method according to Claim 2, **characterized in that** the leak signal is generated as a function of whether a change in the air mass corrective value over time exceeds or undershoots a predefined limit value.

4. Method according to one of the preceding claims, **characterized in that** the detection of a leak in the inlet duct (1) is carried out during an operating phase of the internal combustion engine (3) in which the rotational speed of the internal combustion engine (3) is held constant by a controller which uses the throttle device (10) as an actuator.

5. Method according to one of the preceding claims, **characterized in that** the detection of a leak in the inlet duct (1) is carried out while the internal combustion engine (3) is at idle.

6. Method according to one of the preceding claims, **characterized in that** the difference is formed between the air mass corrective value determined during a period of operation of the internal combustion engine (3) and a comparative value, which is determined and stored during a previous period of operation of the internal combustion engine, of the air mass corrective value, and the leak signal is generated as a function of whether the difference exceeds or undershoots a predefined limit value.

7. Method according to one of the preceding claims, **characterized in that** the detection of a leak in the inlet duct (1) is carried out a certain time period after the internal combustion engine (3) is started.

8. Method according to one of the preceding claims, **characterized in that** the air mass corrective value is determined in such a way that it corresponds to the difference between the main load signal determined at a certain time and the auxiliary load signal determined at said time.

9. Method according to one of the preceding claims, **characterized in that** the dependency of the supplied fuel quantity on the inflowing air mass is a certain stoichiometric ratio between the air mass and the fuel quantity.

10. Method according to one of the preceding claims, **characterized in that** the evaluation signal is generated by multiplying the actuating signal of the lambda controller (8) with at least one corrective value which is generated as a function of at least one adaptation value which is generated by the lambda controller (8) in certain operating phases of the internal combustion engine (3) and which is used for influencing the actuating signal of the lambda controller (8).

11. Method according to Claim 10, **characterized in that** the at least one corrective value is generated as a function of the change in the at least one adaptation value.

12. Method according to Claim 10 or 11, **characterized in that** a multiplicative adaptation value is generated which acts as a multiplier in the determination of the actuating signal.

13. Method according to Claim 10 or 11, **characterized in that** an additive adaptation value is generated which acts additively in the determination of the actuating signal.

14. Method according to one of the preceding claims, **characterized in that** the evaluation signal is generated by multiplying the actuating signal of the lambda controller (8) with a height corrective value which is generated as a function of the height at which the internal combustion engine (3) is situated.

15. Method according to one of the preceding claims, **characterized in that** the evaluation signal is generated by multiplying the actuating signal of the lambda controller (8) with a temperature corrective value which is generated as a function of the temperature of the internal combustion engine (3).

16. Method according to one of the preceding claims, **characterized in that,** during the time period of a measurement window, a first time period is measured in which the evaluation signal exceeds the limit value, and a second time period is determined in which the actuating signal falls below the limit value, the difference between the first and the second time period is related to the elapsed time period of the measurement window in order to obtain a reference variable, and to detect a leak in the inlet duct (1), the reference variable is compared with an error threshold.

17. Method according to Claim 16, **characterized in that** the total time period of the measurement window lasts 8 seconds and the detection of a leak is permitted only after a minimum time period of 4 seconds.

18. Internal combustion engine (3) having an inlet duct (1) in which a throttle device (10) and an air mass sensor (2) are arranged, and having a control device (9), with the air mass sensor (2) being arranged upstream of the throttle device (10) in the flow direction, and with the control device being set up so as to determine a supplied fuel quantity as a function either
of a main load signal generated by the air mass sensor (2) as a function of the measured air mass flow, or
of an auxiliary load signal which is generated by the control device (9) as a function of the throttle angle of the throttle device (10) and of the rotational speed of the internal combustion engine (3), and of an air mass corrective value which the control device (9) determines by comparing the main load signal with the auxiliary load signal,
with the control device (9) being set up such that the supplied fuel quantity is determined from an actuating signal of a lambda controller (8) of the internal combustion engine (3) which measures the oxygen content of the exhaust gas of the internal combustion engine (3) after the combustion and which influences the actuating signal such that the oxygen content of the exhaust gas assumes a certain value,
**characterized in that** the control device (9) is set up such that the control device (9) generates an evaluation signal as a function of the actuating signal of the lambda controller (8) and monitors said evaluation signal with regard to the exceedance or undershooting of a limit value, with the control device (9) generating a leak signal, which indicates a leak in the inlet duct (1), as a function of the air mass corrective value and of the evaluation signal, and **in that** the control device (9), by evaluating the air mass corrective value, distinguishes whether the leak has occurred upstream or downstream of the throttle device (10).

19. Internal combustion engine according to Claim 18, **characterized in that** the control device (9) is set up to carry out the method according to one of Claims 1 to 17.

## Revendications

1. Procédé pour détecter une fuite dans un collecteur d'admission (1) d'un moteur à combustion interne (3), un dispositif d'étranglement (10) et un débitmètre d'air (2) étant disposés dans le collecteur d'admission (1), le débitmètre d'air (2) étant disposé dans la direction d'écoulement avant le dispositif d'étranglement (10), et
une quantité de carburant acheminée étant déterminée en fonction
soit d'un signal de charge principal produit par le débitmètre d'air (2) en fonction du débit massique d'air mesuré soit
d'un signal de charge auxiliaire qui est produit en fonction du degré d'étranglement du dispositif d'étranglement (10) et du régime du moteur à combustion interne (3), et d'une valeur de correction du débit massique d'air, qui est déterminée par comparaison du signal de charge principal avec le signal de charge auxiliaire,
la quantité de carburant acheminée étant déterminée par un signal de commande d'une régulation lambda (8), qui mesure la teneur en oxygène du gaz d'échappement du moteur à combustion interne (3) après la combustion et influence le signal de commande de telle sorte que la teneur en oxygène du gaz d'échappement prenne une certaine valeur,
**caractérisé en ce qu'**un signal d'analyse est surveillé en fonction du dépassement par le haut ou par le bas d'une valeur limite, le signal d'analyse étant produit en fonction du signal de commande de la régulation lambda (8) et un signal de fuite, qui indique une fuite dans le canal d'admission (1), étant produit en fonction de la valeur de correction du débit massique d'air et du signal d'analyse, et
**en ce que**, par une analyse de la valeur de correction du débit massique d'air, on détermine si la fuite s'est produite avant ou après le dispositif d'étranglement (10).

2. Procédé selon la revendication 1, **caractérisé en ce que** le signal de fuite est produit en fonction du fait que la valeur de correction du débit massique d'air et/ou une valeur caractérisant la courbe dans le temps de la valeur de correction du débit massique d'air dépasse par le haut ou par le bas une valeur limite prédéfinie.

3. Procédé selon la revendication 2, **caractérisé en ce que** le signal de fuite est produit en fonction du fait qu'une variation dans le temps de la valeur de correction du débit massique d'air dépasse par le haut ou par le bas une valeur limite prédéfinie.

4. Procédé selon l'une quelconque des revendications précédentes, **caractérisé en ce que** la détection d'une fuite dans le collecteur d'admission (1) est effectuée pendant une phase de fonctionnement du moteur à combustion interne (3), en maintenant constant le régime du moteur à combustion interne (3) par une régulation, qui utilise comme actionneur le dispositif d'étranglement (10).

5. Procédé selon l'une quelconque des revendications précédentes, **caractérisé en ce que** la détection d'une fuite dans le collecteur d'admission (1) est effectuée pendant le mode de ralenti du moteur à combustion interne (3).

6. Procédé selon l'une quelconque des revendications précédentes, **caractérisé en ce que** l'on établit la différence entre la valeur de correction du débit massique d'air détectée pendant un fonctionnement du moteur à combustion interne (3) et une valeur comparative de la valeur de correction du débit massique d'air détectée pendant un fonctionnement précédent du moteur à combustion interne et mémorisée, et le signal de fuite est produit en fonction du fait que la différence dépasse par le haut ou par le bas une valeur limite prédéfinie.

7. Procédé selon l'une quelconque des revendications précédentes, **caractérisé en ce que** la détection d'une fuite dans le collecteur d'admission (1) est effectuée un certain temps après le démarrage du moteur à combustion interne (3).

8. Procédé selon l'une quelconque des revendications précédentes, **caractérisé en ce que** la valeur de correction du débit massique d'air est déterminée de telle sorte qu'elle corresponde à la différence entre le signal de charge principal déterminé à un instant particulier et le signal de charge auxiliaire déterminé à cet instant.

9. Procédé selon l'une quelconque des revendications précédentes, **caractérisé en ce que** la dépendance de la quantité de carburant acheminée du débit massique affluant est un rapport stoechiométrique déterminé entre le volume d'air et la quantité de carburant.

10. Procédé selon l'une quelconque des revendications précédentes, **caractérisé en ce que** le signal d'analyse est généré par la multiplication du signal de commande du régulateur lambda (8) par au moins une valeur de correction, qui est produite en fonction d'au moins une valeur d'adaptation, qui est produite par la régulation lambda (8) dans des phases de fonctionnement déterminées du moteur à combustion interne (3) et qui est utilisée pour influencer le signal de commande de la régulation lambda (8).

11. Procédé selon la revendication 10, **caractérisé en ce que** l'au moins une valeur de correction est produite en fonction de la variation de l'au moins une valeur d'adaptation.

12. Procédé selon la revendication 10 ou 11, **caractérisé en ce qu'**une valeur d'adaptation multiplicative est produite, laquelle agit de manière multiplicative lors de la détermination du signal de commande.

13. Procédé selon la revendication 10 ou 11, **caractérisé en ce qu'**une valeur d'adaptation additive est produite, laquelle agit de manière additive lors de la détermination du signal de commande.

14. Procédé selon l'une quelconque des revendications précédentes, **caractérisé en ce que** le signal d'analyse est produit par multiplication du signal de commande du régulateur lambda (8) avec une valeur de correction de niveau, qui est produite en fonction du niveau auquel se trouve le moteur à combustion interne (3).

15. Procédé selon l'une quelconque des revendications précédentes, **caractérisé en ce que** le signal d'analyse est produit par multiplication du signal de commande du régulateur lambda (8) avec une valeur de correction de la température, qui est produite en fonction de la température du moteur à combustion interne (3).

16. Procédé selon l'une quelconque des revendications précédentes, **caractérisé en ce que** pendant la durée d'une fenêtre de mesure, une première durée est mesurée, durant laquelle le signal d'analyse est supérieur à la valeur limite, et une deuxième durée est déterminée, dans laquelle le signal de commande est inférieur à la valeur limite, la différence entre la première et la deuxième durée est rapportée à la durée écoulée de la fenêtre de mesure pour obtenir une valeur de référence, et pour détecter une fuite dans le collecteur d'admission (1), la valeur de référence est comparée à un seuil d'erreur.

17. Procédé selon la revendication 16, **caractérisé en ce que** la durée totale de la fenêtre de mesure dure 8 secondes et une détection d'une fuite est seulement autorisée après une durée minimale de 4 secondes.

18. Moteur à combustion interne (3) comprenant un collecteur d'admission (1), dans lequel sont disposés un dispositif d'étranglement (10) et un débitmètre d'air (2), et comprenant un dispositif de commande (9), le débitmètre d'air (2) étant disposé dans la direction d'écoulement avant le dispositif d'étranglement (10), et le dispositif de commande étant conçu de telle sorte qu'il produise une quantité de carburant acheminée en fonction
soit d'un signal de charge principal produit par le débitmètre d'air (2) en fonction du débit massique d'air mesuré soit
d'un signal de charge auxiliaire qui est produit par le dispositif de commande (9) en fonction du degré d'étranglement du dispositif d'étranglement (10) et du régime du moteur à combustion interne (3), et d'une valeur de correction du débit massique d'air, qui est déterminée par comparaison du signal de charge principal avec le signal de charge auxiliaire,
le dispositif de commande (9) étant conçu de telle sorte que la quantité de carburant acheminée soit déterminée par un signal de commande d'une régulation lambda (8) du moteur à combustion interne (3), qui mesure la teneur en oxygène du gaz d'échappement du moteur à combustion interne (3) après la combustion et influence le signal de commande de telle sorte que la teneur en oxygène du gaz d'échappement prenne une certaine valeur,
**caractérisé en ce que** le dispositif de commande (9) est conçu de telle sorte que le dispositif de commande (9) produise un signal d'analyse en fonction du signal de commande de la régulation lambda (8) et le surveille, en fonction du dépassement par le haut ou par le bas d'une valeur limite, le dispositif de commande (9) produisant un signal de fuite, qui indique une fuite dans le collecteur d'admission (1), en fonction de la valeur de correction du débit massique d'air et du signal d'analyse, et **en ce que** le dispositif de commande (9) détermine, par une analyse de la valeur de correction du débit massique d'air, si la fuite s'est produite avant ou après le dispositif d'étranglement (10).

19. Moteur à combustion interne selon la revendication 18, **caractérisé en ce que** le dispositif de commande (9) est conçu pour mettre en oeuvre le procédé selon l'une quelconque des revendications 1 à 17.
